# EUROPEAN PATENT APPLICATION

(11) **EP 3 301 489 A1**
(43) Date of publication of application: **04.04.2018**
(21) Application number: 17192597.7
(22) Date of filing: 22.09.2017
(51) Int. Cl.: G02B 6/02, G02B 6/024, G02B 6/44

(54) **POLARIZATION MAINTAINING OPTICAL FIBER WITH NON-SYMMETRIC STRESS APPLYING PARTS**

(30) Priority: 29.09.2016 US 201662401411 P; 23.03.2017 US 201715467668
(71) Applicant: Ofs Fitel Llc, A Delaware Limited Liability Company, Norcross, GA 30071 (US)
(72) Inventor: SUN, Xiaoguang, West Hartford, CT 06117 (US)
(74) Representative: Zimmermann, Tankred Klaus

(57) **Abstract**

Embodiments are directed to an optical fiber cable assembly. The optical fiber cable assembly is a polarization maintaining optical fiber assembly. The assembly includes an optical core located within a cladding. Also within the cladding is a stress rod. The stress rod can be centered within the cladding, with the optical fiber eccentrically located within the cladding. There can also be a second optical fiber eccentrically located within the cladding. The optical fiber can be centered within the cladding, with the stress rod eccentrically located within the cladding.

## Description

### CROSS-REFERENCE TO RELATED APPLICATIONS

This application claims priority to U.S. Provisional Patent Application serial number 62/401,411, filed September 29, 2016, which is hereby incorporated by reference in its entirety.

### BACKGROUND

The embodiments described herein relate in general to the field of fiber optics. More specifically, the embodiments described herein relate to fiber optic cables that maintain polarization.

Optical fibers have been used in communication systems to transmit information. In an ordinary fiber, two polarization modes have the same nominal phase velocity due to the fiber's circular symmetry. Light through the fiber can be considered a combination of light traveling along two orthogonal axes. Tiny amounts of random birefringence in a fiber (e.g., caused by bending of the fiber) can cause a tiny amount of crosstalk from the vertical to the horizontal polarization mode. This crosstalk can result in a power transfer from one mode to another, changing the wave's net state of polarization by changing the ratio of light at the different polarization modes. Because the coupling is unintended and is a result of arbitrary stress or bending applied to the fiber, the state of polarization of the output light might differ from the polarization of the input. The difference can be random and can vary as the stresses to the fiber vary.

### SUMMARY

Embodiments are directed to a device. The device includes an optical core located within a cladding. Also within the cladding is a stress rod. The stress rod can be centered within the cladding, with the optical fiber eccentrically located within the cladding. There can also be a second optical fiber eccentrically located within the cladding. The optical fiber can be centered within the cladding, with the stress rod eccentrically located within the cladding.

Additional features and advantages are realized through techniques described herein. Other embodiments and aspects are described in detail herein. For a better understanding, refer to the description and to the drawings.

### BRIEF DESCRIPTION OF THE DRAWINGS

The subject matter which is regarded as embodiments is particularly pointed out and distinctly claimed in the claims at the conclusion of the specification. The foregoing and other features and advantages of the embodiments are apparent from the following detailed description taken in conjunction with the accompanying drawings in which:
FIG. 1 is an exemplary optical fiber of the prior art;
FIG. 2A is an exemplary optical fiber of one or more embodiments;
FIG. 2B is an exemplary optical fiber of one or more embodiments;
FIG. 3 is an exemplary optical fiber of one or more embodiments; and
FIG. 4 is an exemplary optical fiber of one or more embodiments.

### DETAILED DESCRIPTION

Various embodiments of the present invention will now be described with reference to the related drawings. Alternate embodiments can be devised without departing from the scope of this invention. Various connections might be set forth between elements in the following description and in the drawings. These connections, unless specified otherwise, can be direct or indirect, and the present description is not intended to be limiting in this respect. Accordingly, a coupling of entities can refer to either a direct or an indirect connection.

One way of addressing the stress-induced issues discussed above is the use of polarization-maintaining fibers. A polarization-maintaining fiber works by intentionally introducing a systematic linear birefringence in the fiber. The result is that there are two well-defined polarization modes that propagate along the fiber with different phase velocities (sometimes called a slow axis and a fast axis).

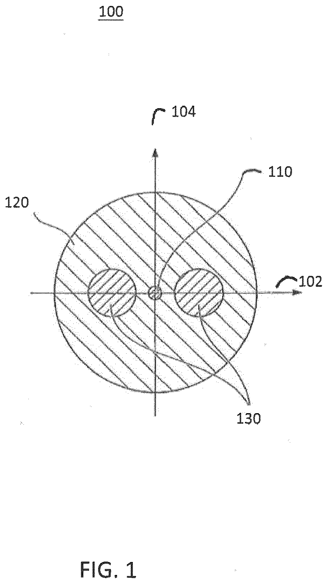

One method of creating birefringence in a fiber is to induce stress in the fiber to produce stress birefringence. With reference to FIG. 1, a cross-section of an exemplary fiber optic cable 100 is shown. Core 110 is configured to carry fiber optic signals. Surrounding core 110 is a cladding 120. Within cladding 120 are stress rods 130. Typically, the refractive index of cladding 120 is lower than the refractive index of core 110. The refractive index of stress rods 130 is typically lower than the refractive index of cladding 120. There can be additional parts of a fiber optic cable that are not shown. For example, there can be a buffer around the cladding, with a jacket surrounding the buffer.

The material of stress rods 130 is different from that of cladding 120. During construction of the fiber optic cable, the linear expansion coefficient of the stress rods 130 is larger than that of the cladding 120. Thus, stress rods 130 shrink more than the cladding 120, inducing a tensile strain in cladding 120 and core 110. The tensile strain creates a birefringence as a result of the refractive index difference between the two polarizations. This birefringence makes the two polarization modes propagate at different speeds.

Stress rods 130 can be in one of a variety of different of configurations. For example, stress rods 130 can be one of a variety of different shapes. Two commonly used shapes are bow-tie shapes and circular shapes (also known as a PANDA (Polarization maintaining AND Absorption reducing) configuration).

As illustrated in FIG. 1, stress rods 130 are typically placed symmetrically around core 110. Fiber optic cable 100 has two polarization axes that are orthogonal to each other. As described above, light on the two axes travel at different speeds, so they are referred to as a slow axis and a fast axis. The slow axis 102 is the axis created by a straight line passing through core 110 in line with stress rods 130. The fast axis 104 is the axis that is perpendicular to the slow axis that passes through the center of core 110.

Problems can occur when coupling two such fiber optic cables together. When coupling the fiber optic cables together, they are typically matched such that the stress rods align with each other. When the fiber optic cables are aligned such that the polarization of the light propagating through core 100 is along the slow axis, stress rods 130 are in-line with the signal. The birefringence is high, which is desirable, but stress rods 130 can interfere with the coupling because light can also couple through stress rods 130. The result can be a loss of signal strength. When the fiber optic cable is rotated 90 degrees such that the light signal travels orthogonal to the stress rods, there are no stress rods between the cores, the birefringence is low, but the polarization extinction ratio (the ratio between one polarization to the orthogonal polarization) is also low, which is not desirable.

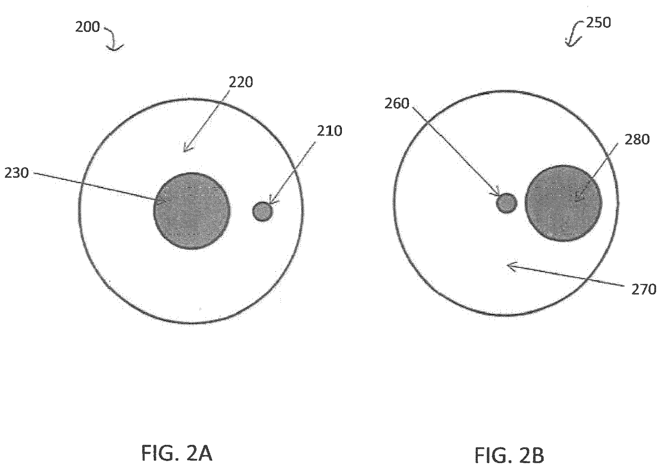

With reference to FIGs. 2A-2B, fiber optic cables 200 and 250 of one or more embodiments are presented that address the above-presented issues. Only a single stress rod is present in both fiber optic cable 200 and fiber optic cable 250. In FIG. 2A, core 210 is placed off-center (eccentrically) within cladding 220, with stress rod 230 being centered within cladding 220. In FIG. 2B, core 260 is centered in the cladding 270, while a single stress rod 280 is placed off-center within cladding 270. As with FIG. 1, there can be additional materials present in a fiber optic cable that are not illustrated (such as a buffer or a jacket). While stress rods 230 and 280 are shown with a circular cross-section (also known as a PANDA) shape, stress rods 230 and 280 can have any one of a variety of different cross sections.

A wide variety of materials can be used for core 210 or 260, cladding 220 or 270, or stress rods 230 or 280. For example, core 210 or 260 can be constructed of a plastic. In some embodiments, core 210 or 260 can be constructed of glass. In some embodiments, the glass can be a silica glass. In some embodiments, the silica can be doped to change the index of refraction, such as with germanium, phosphorus, boron, or fluorine. Other materials can also be used, such as fluorozirconate, fluoroaluminate, and chalcogenide glasses as well as crystalline materials like sapphire. Cladding 220 or 270 and stress rods 230 or 280 can be constructed of similar materials. In some embodiments, cladding 220 or 270 and stress rods 230 or 280 can be doped to change the refractive index such that the refractive index of cladding 220 or 270 and stress rods 230 or 280 do not match the refractive index of cores 210 or 260.

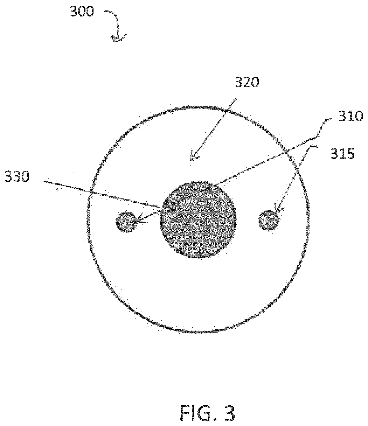

FIG. 3 is an example of one or more embodiments. In a manner similar to that illustrated in FIG. 2A, fiber optic cable 300 contains a cladding 320 and a stress rod 330. However, fiber optic cable 300 includes two cores 310 and 315. In the embodiment shown in FIG. 3, stress rod 330 is centered within cladding 320. Cores 310 and 315 are located in-line with each other on a line that forms a diameter of cladding 320. In some embodiments, cores 310 and 315 are equidistant from the center of cladding 320.

The presence of a single stress rod (such as stress rod 230 or stress rod 330) still provides enough birefringence in the fiber optic cable to maintain the polarization of the propagating light. However, the presence of only a single stress rod lowers the interference with a coupling between fiber optic cables while also ensuring a high polarization extinction ratio.

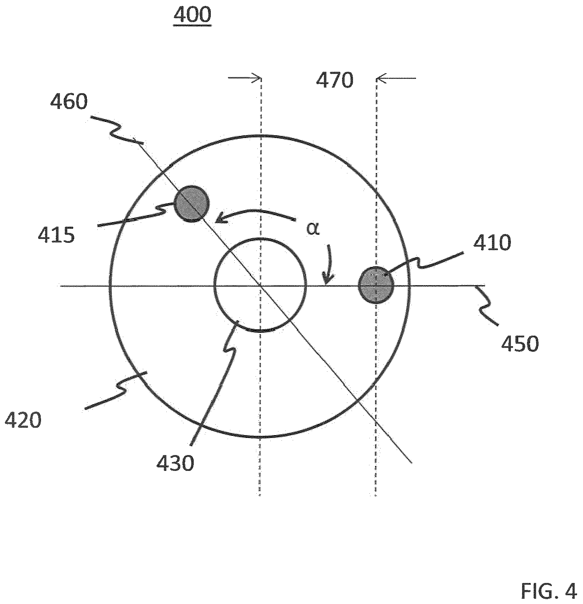

It should be understood that the cores (such as cores 310 and 315) need not be used in other angles with respect to the stress rod (such as stress rod 330). An example of such an embodiment is presented in FIG. 4.

An example of one or more embodiments is presented in FIG. 4. In a manner similar to that illustrated in FIG. 3, fiber optic cable 400 contains a cladding 420 and a stress rod 430. Fiber optic cable 400 also includes two cores 410 and 415. In the embodiment shown in FIG. 4, stress rod 430 is centered within cladding 420. Cores 410 and 415 are located on different axes from each other on a line that forms a diameter of cladding 320. As shown in FIG. 4, core 410 is located on an axis 450 with respect to stress rod 430. Core 415 is located on an axis 460 with respect to stress rod 430. Thus, there is an angle α formed between axis 450 and axis 460. In the embodiment shown in FIG. 3, such an angle is 180 degrees. In the embodiment shown in FIG. 4, the angle is less than 180 degrees. In some embodiments, cores 410 and 415 are equidistant from the center of cladding 420, each at a distance represented by distance 470. In other embodiments, the distance between the center of cores 410 and 415 and the center of stress rod 430 is not the same.

An exemplary fiber optic cable featuring elements of one or more embodiments has been shown to have excellent characteristics. In the exemplary fiber optic cable, a diameter of the cladding is 125 microns and the diameter of the stress rod is 30 microns. A distance from an edge of the stress rod to an edge of the core is 9 microns. In such a prototype, it has been found that an attenuation of a 1550 nm signal is 0.250 to 0.40 decibels per kilometer, preferably 0.28 to 0.32 decibels per kilometer, and preferably 0.317 decibels per kilometer (dB / km). The crosstalk of a 1550 nm signal is -20 to -35 dB per 100 meters, preferably - 25 to -30 dB per 100 meters, and more preferably about - 28.04 dB per 100 meters.

The beat length of a fiber optic cable is defined as the length between a 2π phase retardation between light along the fast axis of a fiber and light along the slow axis of the fiber. In general, a shorter beat length is desired. In the above-described prototype, the beat length of a 1550 nm signal is 10 to 15 nanometers, preferably 12 to 14 nanometers, and more preferably about 13.7 nm.

The mode field diameter of a fiber optic cable is defined as an expression of distribution of the irradiance across the end face of a single-mode optical fiber. In other words, the mode field diameter is that at which the electric and magnetic field strengths are reduced to 1/e of the maximum values. In the above-described prototype, the mode field diameter is 10.66 microns.

In one embodiment, in one manner of manufacturing the fiber optic cable, a cladding may be disposed on one or more cores and on one or more stress rods to form the fiber optic cable. The cladding may be disposed on the on one or more cores and on one or more stress rods by extrusion.

Further embodiments are now described.

In accordance with a 1^{st} embodiment, the present invention provides a device for transmitting information via light signals comprising a cladding; an optical core centered within the cladding; and a single stress rod eccentrically located within the cladding.

In accordance with a 2^{nd} embodiment, the present invention provides the device of the 1^{st} embodiment, wherein the single stress rod is configured to maintain a polarization of light traversing through the optical core by applying stress to the optical core.

In accordance with a 3^{rd} embodiment, the present invention provides the device of the 1^{st} or 2^{nd} embodiment further comprising a buffer surrounding the cladding; and jacket surrounding the buffer.

In accordance with a 4^{th} embodiment, the present invention provides the device of one of the 1^{st} to 3^{rd} embodiments, wherein the stress rod is a polarization maintaining and absorption reducing fiber.

In accordance with a 5^{th} embodiment, the present invention provides the device of one of the 1^{st} to 4^{th} embodiments, wherein the stress rod has a bow-tie shape.

In accordance with a 6^{th} embodiment, the present invention provides the device of one of the 1^{st} to 5^{th} embodiments, wherein the optical core comprises a silica glass.

In accordance with a 7^{th} embodiment, the present invention provides the device of one of the 1^{st} to 6^{th} embodiments, wherein the optical core has a refractive index that is lower than a refractive index of the cladding; and the refractive index of the cladding is lower than a refractive index of the stress rod.

In accordance with an 8^{th} embodiment, the present invention provides the device of one of the 1^{st} to 7^{th} embodiments, wherein the device is an optical fiber cable assembly.

In accordance with a 9^{th} embodiment, the present invention provides a device for transmitting information via light signals comprising a cladding; a first optical core eccentrically located within the cladding; and a single stress rod centered within the cladding.

In accordance with a 10^{th} embodiment, the present invention provides the device of the 9^{th} embodiment, wherein the single stress rod is configured to maintain a polarization of light traversing through the first optical core by applying stress to the first optical core.

In accordance with an 11^{th} embodiment, the present invention provides the device of the 9^{th} or 10^{th} embodiment further comprising a buffer surrounding the cladding; and a jacket surrounding the buffer.

In accordance with a 12^{th} embodiment, the present invention provides the device of one of the 9^{th} to 11^{th} embodiments, wherein the stress rod is a polarization maintaining and absorption reducing fiber.

In accordance with a 13^{th} embodiment, the present invention provides the device of one of the 9^{th} to 12^{th} embodiments, wherein the stress rod has a bow-tie shape.

In accordance with a 14^{th} embodiment, the present invention provides the device of one of the 9^{th} to 13^{th} embodiments, wherein the first optical core comprises a silica glass.

In accordance with a 15^{th} embodiment, the present invention provides the device of one of the 9^{th} to 14^{th} embodiments, wherein the first optical core has a refractive index that is lower than a refractive index of the cladding; and the refractive index of the cladding is lower than a refractive index of the stress rod.

In accordance with a 16^{th} embodiment, the present invention provides the device of one of the 9^{th} to 15^{th} embodiments, wherein the device is an optical fiber cable assembly.

In accordance with a 17^{th} embodiment, the present invention provides the device of one of the 9^{th} to 16^{th} embodiments, further comprising a second optical core located eccentrically within the cladding.

In accordance with an 18^{th} embodiment, the present invention provides the device of the 17^{th} embodiment, wherein the second optical core is positioned in-line with the first optical core along a diameter of the cladding.

In accordance with a 19^{th} embodiment, the present invention provides the device of the 17^{th} or 18^{th} embodiment, wherein the first optical core and the second optical core are equidistant from a center of the cladding.

In accordance with a 20^{th} embodiment, the present invention provides the device of one of the 17^{th} to 19^{th} embodiments, wherein an angle formed between a line joining the first optical core and the stress rod and a line joining the second optical core and the stress rod is less than 180 degrees.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

The corresponding structures, materials, acts, and equivalents of all means or step plus function elements in the claims below are intended to include any structure, material, or act for performing the function in combination with other claimed elements as specifically claimed. The descriptions presented herein are for purposes of illustration and description, but is not intended to be exhaustive or limited. Many modifications and variations will be apparent to those of ordinary skill in the art without departing from the scope and spirit of embodiments of the invention. The embodiment was chosen and described in order to best explain the principles of operation and the practical application, and to enable others of ordinary skill in the art to understand embodiments of the present invention for various embodiments with various modifications as are suited to the particular use contemplated.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A device for transmitting information via light signals comprising:
a cladding;
an optical core centered within the cladding; and
a single stress rod eccentrically located within the cladding.

2. The device of claim 1, wherein the single stress rod is configured to maintain a polarization of light traversing through the optical core by applying stress to the optical core.

3. The device of any one of claims 1 or 2 further comprising:
a buffer surrounding the cladding; and
a jacket surrounding the buffer.

4. The device of any one of claims 1 through 3, wherein the stress rod is a polarization maintaining and absorption reducing fiber and wherein the stress rod has a bow-tie shape.

5. The device of any one of claims 1 through 4, wherein the optical core comprises a silica glass.

6. The device of any one of claims 1 through 5, wherein:
the optical core has a refractive index that is lower than a refractive index of the cladding; and
the refractive index of the cladding is lower than a refractive index of the stress rod.

7. A device for transmitting information via light signals comprising:
a cladding;
a first optical core eccentrically located within the cladding; and
a single stress rod centered within the cladding.

8. The device of claim 7, wherein the single stress rod is configured to maintain a polarization of light traversing through the first optical core by applying stress to the first optical core.

9. The device of any one of claims 7 or 8 further comprising:
a buffer surrounding the cladding; and
a jacket surrounding the buffer.

10. The device of any one of claims 8 through 9, wherein the stress rod is a polarization maintaining and absorption reducing fiber and wherein the stress rod has a bow-tie shape.

11. The device of any one of claims 8 through 10, wherein the first optical core comprises a silica glass.

12. The device of any one of claims 8 through 11, wherein:
the first optical core has a refractive index that is lower than a refractive index of the cladding; and
the refractive index of the cladding is lower than a refractive index of the stress rod.

13. The device of any one of claims 8 through 12, further comprising:
a second optical core located eccentrically within the cladding.

14. The device of any one of claims 8 through 13, wherein the second optical core is positioned in-line with the first optical core along a diameter of the cladding.

15. The device of any one of claims 8 through 14, wherein an angle formed between a line joining the first optical core and the stress rod and a line joining the second optical core and the stress rod is less than 180 degrees.
